Europäisches Patentamt

European Patent Office

Office européen des brevets

(11) Veröffentlichungsnummer: **0 089 594**
**A1**

(12) **EUROPÄISCHE PATENTANMELDUNG**

(21) Anmeldenummer: **83102501.0**

(22) Anmeldetag: **14.03.83**

(51) Int. Cl.³: **B 29 B 1/06**

(30) Priorität: **23.03.82 DE 3210631**

(43) Veröffentlichungstag der Anmeldung:
**28.09.83 Patentblatt 83/39**

(84) Benannte Vertragsstaaten:
**FR GB IT**

(71) Anmelder: **Papenmeier, Friedrich Horst**
**Talweg 2**
**D-5840 Schwerte 1(DE)**

(72) Erfinder: **Papenmeier, Friedrich Horst**
**Talweg 2**
**D-5840 Schwerte 1(DE)**

(72) Erfinder: **Fulhaber, Lucien**
**1, Rue Joseph Depierre**
**F-68700 Cernay(FR)**

(74) Vertreter: **Marx, Lothar, Dr.**
**Pirmaterstrasse 3a**
**D-8000 München 70(DE)**

(54) **Mischmaschine für rieselfähiges Gut.**

(57) Eine Mischmaschine für rieselfähiges Gut, insbesondere zum Heißmischen von PVC-Pulver, weist ein angetriebenes, drehbares Werkzeug (14) in einem stationären, etwa zylinderförmigen Mischgutbehälter mit einer Bodenplatte (2), mit einem Zylindermantel (1) und mit einer Deckelplatte (16) auf; die Auslauföffnung (5) ist als achsparalleler Spalt im Zylindermantel (1) augebildet und reicht, ausgehend von der Bodenplatte (2), bis auf mindestens 2/3 der Behälterhöhe, so daß beim Öffnen der Auslauföffnung (5) das rotierende Gut aufgrund der erzeugten Zentrifugalkräfte von dem Mischwerkzeug (14) aus dem Mischgutbehälter herausgeschleudert wird. Eine Verringerung der Drehzahl des Mischwerkzeugs ist hierbei nicht erforderlich.

Fig 1

EP 0 089 594 A1

Croydon Printing Company Ltd

welle in der Regel von einem Elektromotor angetrieben, der mit zwei verschiedenen Drehzahlen laufen kann.

Beim Betrieb mit der hohen Drehzahl erreichen die Mischwerkzeuge in der Mischphase eine Geschwindigkeit von ca. 20 bis 50 m/s, wobei der erzielte Wert von Bauart und Größe der Mischmaschine abhängt; durch diese Geschwindigkeit wird die schnelle Durchmischung und gleichzeitige Aufheizung des Mischgutes durch Friktionswärme erreicht, und zwar, je nach Rezeptur, in etwa 3 bis 10 Minuten.

Zur Entleerung des Behälters und damit zur Ausgabe des aufbereiteten Gutes wird der Elektromotor auf die niedrige Drehzahl zurückgeschaltet und gleichzeitig die Auslauföffnung geöffnet, so daß das Mischgut unter der Schaufelwirkung der Mischwerkzeuge durch die Auslauföffnung auslaufen kann.

Die Verringerung der Drehzahl in der Entleerungsphase ist wesentlich, damit das Mischgut während der langen Auslaufzeit, die etwa 10 bis 20 % der eigentlichen Mischzeit betragen kann, nicht noch weiter aufgewärmt wird und sich dadurch weiter verändert.

Ein wesentlicher Nachteil dieser bekannten Mischmaschine liegt darin, daß die Herstellung des Behälters für das Mischgut sehr aufwendig ist; denn der Boden und der Deckel müssen auf nicht näher dargestellte Weise mit den Zylindermantel verbunden und die Auslauföffnung in den Zylindermantel eingeschnitten werden, so daß aufwendige Schweiß- , Schleif- und Polierarbeiten erforderlich sind.

Der Erfindung liegt deshalb die Aufgabe zugrunde, eine Mischmaschine für rieselfähiges Gut, insbesondere zum Heißmischen von PVC-Pulver, der angegebenen Gattung zu

**Patentanwalt**

**Dipl.-Phys. Dr. Lothar Marx**

Firmaterstraße 3a
D-8000 München 70
Telefon 089/8355 94
Telex 5 212312 marx d

Anwaltsakte 6420 'EU

Friedrich Horst Papenmeier

Talweg 2

5840 Schwerte 1

Mischmaschine für rieselfähiges Gut

Die Erfindung betrifft eine Mischmaschine für rieselfähiges Gut, insbesondere zum Heißmischen von PVC-Pulver, der im Oberbegriff des Anspruchs 1 angegebenen Gattung.

Eine solche Mischmaschine ist aus der US-PS 3 980 282 bekannt und weist einen ruhenden, vertikalachsigen Behälter für das Mischgut mit einer Bodenplatte, mit einem Zylindermantel und mit einem Deckel, weiterhin ein angetriebenes, drehbar gelagertes und koaxial zur Behälterachse angeordnetes Mischwerkzeug, wenigstens eine rechteckige Auslaßöffnung für das Mischgut im Zylindermantel, wobei eine Seite der Auslaßöffnung parallel zur Behälterachse verläuft, und einen verstellbaren Verschlußdeckel für die Auslauföffnung auf.

Bei Heißmischern für PVC-Pulver wird die Mischwerkzeug-

- 2 -

schaffen, die aus einfachen, leicht zusammenzubauenden Teilen besteht.

Diese Aufgabe wird erfindungsgemäß durch die im kennzeichnenden Teil des Anspruchs 1 angegebenen Merkmale gelöst.

Zweckmäßige Ausführungsformen sind in den Unteransprüchen zusammengestellt.

Die mit der Erfindung erzielten Vorteile beruhen insbesondere darauf, daß der Behälter für das Mischgut nicht den bisher üblichen, geschlossenen Zylindermantel aufweist, in den die Auslauföffnung eingeschnitten wird, sondern der Zylindermantel nicht vollständig geschlossen ist, d.h., daß beispielsweise ein etwa rechteckiges, flaches Ausgangsblech zu einem nicht ganz geschlossenen Zylinder gebogen wird, so daß zwischen den beiden, einander gegenüberliegenden Stirnkanten dieses Blechs ein als Auslauföffnung dienender Spalt entsteht, der sich über die gesamte Höhe des Zylindermantels erstreckt. Die Halterung dieses "offenen" Zylindermantels erfolgt durch Zugstangen, die den Zylindermantel zwischen der Bodenplatte und dem Deckel einspannen.

Dadurch bietet sich der weitere Vorteil, daß der durch die Schleifwirkumg der gemischten Güter stark beanspruchte Bodenbereich bei Bedarf ohne Probleme gegen den weniger beanspruchten oberen Bereich des Zylindermantels ausgetauscht werden kann.

Auch ein weiteres Problem der herkömmlichen Heißmischer für PVC-Pulver kann durch diese Anordnung der Auslauföffnung vermieden werden. Ist nämlich bei einer solchen herkömmlichen Mischmaschine der Filter für die Ausgleichsöffnung verstopft, oder ist diese Ausgleichsöffnung nicht vorhanden, so kann der Druckausgleich im Behälter für das Mischgut nur über die Luft erfolgen, die durch die Auslauföffnung in den Behälter einströmt; die Richtung dieser Luftströmung ist jedoch entgegengesetzt zur Auslaufrichtung des Mischgutes, so daß der kontinuierliche, schnelle Ausfluß des Mischgutes, der zur Erzielung einer möglichst kurzen Entleerungszeit angestrebt wird, gestört und verzögert wird.

Gerade beim Heißmischen von PVC-Pulver tritt jedoch eine solche Verstopfung des Filters der Ausgleichsöffnung oft schon nach wenigen Chargen auf, wenn dem Mischgut relativ viel Feuchtigkeit entweicht, die sich mit dem Staub im Filtermaterial zu einem massiven Filterkuchen verbindet, so daß ein schneller Druckausgleich durch die Ausgleichsöffnung nicht mehr möglich ist.

Bei der hier beschriebenen Mischmaschine kann der Druckausgleich im Behälter durch die Auslauföffnung selbst erfolgen, da das Mischgut den oberen Bereich der spaltförmigen Auslauföffnung nicht bedeckt, also beim Öffnen des Verschlußdeckels über diesen Bereich sofort Luft von außen in das Innere des Behälters einströmen kann.

Die Herstellung des Zylindermantels und seine Verbindung mit der Bodenplatte und dem Deckel vereinfacht sich wesentlich, da nun keine aufwendigen Schneid-, Schweiß-, Schleif- und Polierarbeiten mehr erforderlich sind.

Die Ausflauföffnung kann durch eine, beispielsweise über einen Pneumatikzylinder betätigbare,Klappe verschlossen werden, die um eine parallel zur Achse des Zylindermantels verlaufende Achse schwenkbar ist.

Zweckmäßigerweise werden zwei nebeneinander angeordnete Klappen verwendet, die um eine gemeinsame Achse, jedoch unabhängig voneinander, geschwenkt werden können. Dann kann, beispielsweise bei der Beschickung, die obere Klappe in der geöffneten Stellung gelassen werden, so daß sich eine Entlüftungsöffnung ergibt, die beim Beginn des eigentlichen Mischvorgangs geschlossen wird.

Und schließlich kann der Antrieb der Welle der Mischwerkzeuge nun durch einen leichteren und preisgünstigen Elektromotor erfolgen, der nur mit einer einzigen Drehzahl läuft, wodurch sich gleichzeitig eine Verringerung des Schaltgeräte- und Installationsaufwandes ergibt.

Die Erfindung wird im folgenden anhand von Ausführungsbeispielen unter Bezugnahme auf die beiliegenden, schematischen Zeichnungen näher erläutert. Es zeigen

Fig. 1 einen Teilschnitt des Innen- und Außenmantels des Auslaufbereiches einer Mischmaschine mit abgenommenem Auslaufgehäuse, und

Fig. 2 einen Teilschnitt durch den Behälter für das Mischgut mit Auslaufgehäuse längs der Linie A-A von Fig. 1.

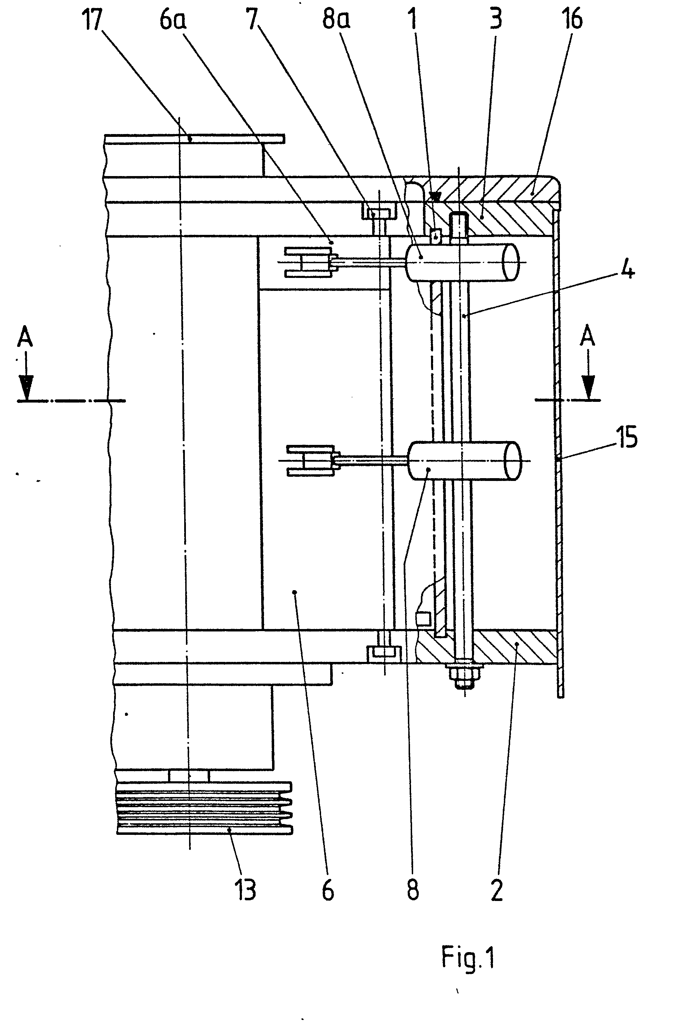

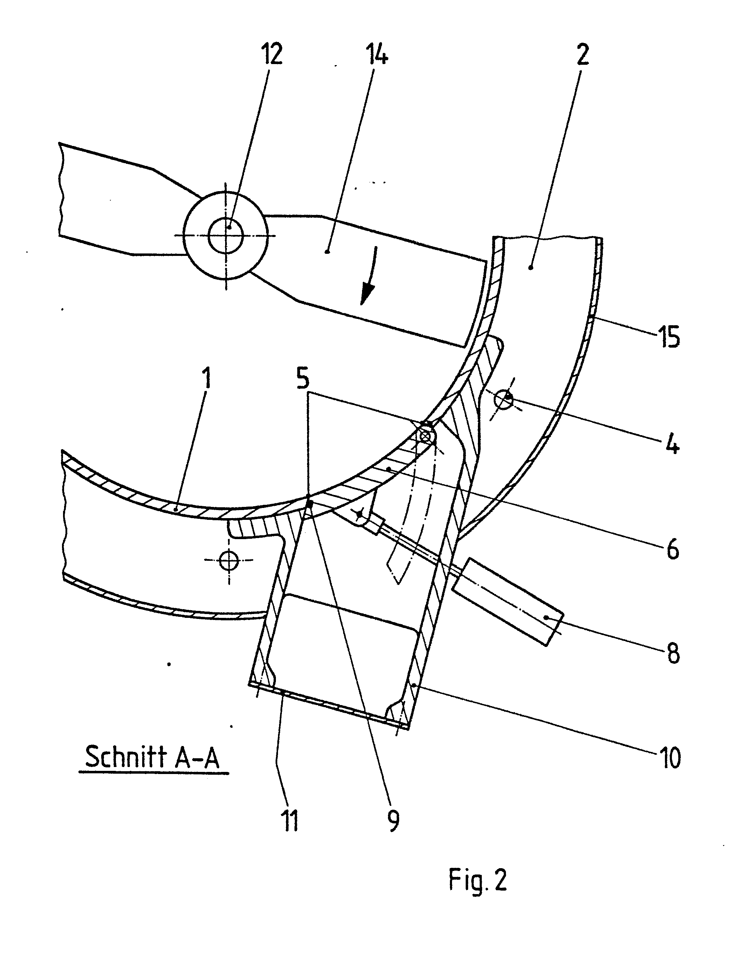

Der in den Figuren 1 und 2 dargestellte Behälter für das Mischgut einer Mischmaschine weist einen am Umfang offenen Zylindermantel 1 auf, der stirnseitig zwischen einer genuteten Bodenplatte 2 und einem Kopfring 3 durch Zugstangen 4 eingespannt ist, die über den Umfang des Zylindermantels gleichmäßig verteilt sind. Ein achsparalleler Spalt am Umfang des Zylindermantels 1 bildet eine Auslauföffnung 5, die durch zwei voneinander unabhängige, auf einer gemeinsamen Achse 7 drehbare Auslaufklappen 6, 6a verschlossen werden kann. Die Betätigung der beiden Auslaufklappen 6 und 6a erfolgt über unabhängige, zugeordnete Pneumatikzylinder 8 und 8a. Am Rand der Auslauföffnung 5 ist eine umlaufende Kantendichtung 9 vorgesehen, die zur Abdichtung der Auslaufklappen 6 und 6a gegen den Zylindermantel 1 dient.

Wie man insbesondere in Figur 1 erkennt, ist die Achse 7 an einer vertikalen Kante des Zylindermantels 1 angeordnet, so daß die Klappen 6, 6a aus der ausgezogen dargestellten Lage, in der sie einen Teil der Wandung des Zylindermantels 1 bilden, mittels der Pneumatikzylinder 8, 8a in die strichpunktiert angedeutete Lage (Fig.2) geschwenkt werden können, so daß die Auslauföffnung 5 frei-gegeben wird.

Wie man in Figur 1 erkennt, nimmt die bei vertikaler Aufstellung des Mischgutbehälters untere Klappe 6 mindestens 3/4 der Höhe des Mischgutbehälters ein, während die obere Klappe 6a den verbleibenden Teil der Höhe bedeckt.

Beide : Klappen 6 und 6a sitzen auf einer gemeinsamen, achsparallelen Achse 7, die im Kopfring 3 schwenkbar gelagert ist.

Als Abdeckung für die Auslauföffnung 5 und die Auslaufklappen 6 und 6a sowie zur Lenkung des auslaufenden Mischgutstromes dient ein Auslaufgehäuse 10 (s. Figur 2), das sich etwa tangential an den Zylindermantel 1 anschließt, also ebenfalls die freie Ausströmung des rotierenden Mischgutes nicht behindert. Das Auslaufgehäuse 10 ist durch einen Deckel 11 verschlossen, der den Zugang zu den Auslaufklappen 6 und 6a und der Auslauföffnung 5 ermöglicht.

In der Mitte des Mischgutbehälters befindet sich eine drehbar gelagerte Welle 12, die über eine Riemenscheibe 13 mit einem nicht dargestellten, eintourigen Elektromotor verbunden ist; auf der Welle 12 sitzen die üblichen Mischwerkzeuge 14.

6420                                          0089594

Zur äußeren Verkleidung des Mischgutbehälters dient ein
Außenmantel 15.

Nach oben wird der Mischgutbehälter durch einen
Deckel 16 verschlossen, die in der Mitte eine Beschickungsöffnung 17 für die Einfüllung des aufzubereitenden Gutes,
beispielsweise von PVC-Pulver, aufweist.

Im folgenden soll die Funktionsweise dieser Mischmaschine
erläutert werden.

Zweckmäßigerweise wird die Mischmaschine bei leerem Mischgutbehälter gestartet, da dann das Mischwerkzeug 14 die
Soll-Drehzahl in der kürzesten Zeit erreicht, also die
Zeit der Einschaltstromspitze des Elektromotors auf ein
Minimum begrenzt wird. Dann wird die untere Auslaufklappe
6 mittels ihres Pneumatikzylinders 8 geschlossen, während
die obere, kleinere Auslaufklappe 6a geöffnet bleibt.

Nun wird die erste Charge durch die Beschickungsöffnung
17 in der Deckelplatte eingefüllt. Die dabei aus dem Mischgutbehälter verdrängte Luft kann durch den oberen Teil
der Auslauföffnung 5 ausströmen, weil ja die obere Klappe
6a noch geöffnet ist; einige Sekunden nach der Beschickung,
wenn der Druckausgleich erfolgt ist, wird dann die obere
Auslaufklappe 6a geschlossen.

Mit dem Einlaufen des zu mischenden Gutes bei rotierenden Mischwerkzeugen 13 ist der Mischprozeß bereits im
vollen Gange; ein solcher Mischprozeß kann beispielsweise
5 Minuten lang dauern und wird über einen zeit- oder
temperaturabhängigen Schaltbefehl einfach dadurch beendet, daß die beiden Auslaufklappen 6 und 6a geöffnet
werden, wodurch das Mischgut bei voller Geschwindigkeit des Mischwerkzeugs 13 durch die Auslauföffnung 5 frei
und ungehindert aus dem Mischgutbehälter auslaufen kann.

In dem Maße, wie die von oben nach unten absinkende und
auslaufende Mischgutsäule die Auslauföffnung 5 freigibt,
kann Luft von außen ungehindert in den Mischgutbehälter
einströmen, wodurch sich ein selbsttätiger Druckausgleich,
auch ohne zusätzliche Lüftungsöffnung in dem Deckel ergibt. Die Auslaufzeit beträgt etwa 8 Sekunden, wie durch
Versuche mit einem Prototyp einer solchen Mischmaschine
gezeigt werden konnte.

Einige Sekunden nach der vollständigen Entleerung des
Mischgutbehälters wird die untere Auslaufklappe 6 wieder
geschlossen, so daß ein neuer Mischzyklus durch Beschickung mit der nächsten Charge beginnen kann.

Obwohl bisher eine Mischmaschine beschrieben worden ist,
bei der der Zylindermantel senkrecht angeordnet ist, also
die Achse des Zylindermantels senkrecht verläuft, läßt
sich der gleiche Grundgedanke auch bei horizontal angeordnetem Zylindermantel des Mischgutbehälters anwenden.

Da der Zylindermantel 1 zwischen der Bodenplatte 2 und
dem Kopfring 3 durch die Zugstangen 4 eingespannt ist,
also keine permanente Verbindung, beispielsweise Schweißverbindung, zwischen diesen Teilen besteht, lassen sich
der Kopfring 3, der Zylindermantel 1 und die Bodenplatten
2 demontieren, indem man die in Fig. 1 ersichtlichen
Muttern am unteren Ende der Zugstangen 4 löst. Anschließend
kann der Zylindermantel umgedreht und wieder mit der Bodenplatte und dem Deckel verbunden werden.

Ende der Beschreibung

**Patentanwalt**

**Dipl.-Phys. Dr. Lothar Marx**

Pirmaterstraße 3a
D-8000 München 70
Telefon 089/71 58 13 94
Telex 5 212 312 marx d

Anwaltsakte 6420

Friedrich Horst Papenmeier

Talweg 2, 5840 Schwerte 1

---

Mischmaschine für rieselfähiges Gut

---

## Patentansprüche

1. Mischmaschine für rieselfähiges Gut, insbesondere zum Heißmischen von PVC-Pulver,

a) mit einem ruhenden, etwa zylinderförmigen Mischgutbehälter mit einer Bodenplatte, mit einem Zylindermantel und mit einer Deckelplatte,

b) mit einem drehbar gelagerten, angetriebenen Mischwerkzeug in der Mittelachse des Mischgutbehälters,

c) mit wenigstens einer Auslauföffnung in dem Mischgutbehälter, und

d) mit einem verstellbaren Verschluß für die Auslauföffnung,

d a d u r c h   g e k e n n z e i c h n e t ,   daß

e) sich die Auslauföffnung (5) achsparallel von der Bodenplatte (2) bis auf mindestens 2/3 der Höhe des Mischgutbehälters erstreckt.

2. Mischmaschine nach Anspruch 1, dadurch gekennzeichnet, daß die Auslauföffnung (5) durch einen achsparallelen, über die gesamte Höhe des Mischgutbehälters verlaufenden Spalt des Zylindermantels (1) gebildet wird.

3. Mischmaschine nach einem der Ansprüche 1 oder 2, dadurch gekennzeichnet, daß die Auslauföffnung Rechteckform hat.

- 2 -

6420

4. Mischmaschine nach einem der Ansprüche 1 bis 3, dadurch gekennzeichnet, daß der Zylindermantel (1) durch Zugstangen (4) zwischen die Bodenplatte (2) und die Deckelplatte (3, 16) eingespannt ist.

5. Mischmaschine nach einem der Ansprüche 1 bis 4, dadurch gekennzeichnet, daß die Bodenplatte (2) und/oder die Deckelplatte (3, 16) genutet sind.

6. Mischmaschine nach einem der Ansprüche 1 bis 5, dadurch gekennzeichnet, daß sich an die Auslauföffnung (5) näherungsweise tangential zum Zylindermantel (1) ein Auslaufgehäuse (10) anschließt.

7. Mischmaschine nach Anspruch 6, dadurch gekennzeichnet, daß das Auslaufgehäuse (10) durch einen Deckel (11) verschließbar ist.

8. Mischmaschine nach einem der Ansprüche 1 bis 7, dadurch gekennzeichnet, daß der Verschluß der Auslauföffnung (5) durch mindestens eine Klappe (6, 6a) gebildet wird, die um eine achsparallele Achse (7) schwenkbar ist.

9. Mischmaschine nach Anspruch 8, gekennzeichnet durch zwei nebeneinander angeordnete, um eine gemeinsame, achsparallele Achse (7) schwenkbare Klappen (6, 6a), und durch eine Betätigungseinrichtung (8, 8a) für jede Klappe (6, 6a).

10. Mischmaschine nach Anspruch 9, dadurch gekennzeichnet, daß die untere Klappe (6) zumindestens 3/4 der Höhe des Zylindermantels und die obere Klappe (6a) die restliche Höhe des Zylindermantels einnimmt.

Fig. 1

12  14  2

15

1  5

4

6

8

10

Schnitt A-A

11  9

Fig. 2

| | EINSCHLÄGIGE DOKUMENTE | | EP 83102501.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl ³) |
| D,X | <u>US - A - 3 980 282</u> (BURCH et al.) <br> * Gesamt * <br> -- | 1,3,8 | B 29 B  1/06 |
| A | <u>AT - B - 245 791</u> (WERNER & PFLEIDERER) <br> * Gesamt * <br> ---- | | |

RECHERCHIERTE
SACHGEBIETE (Int. Cl. ³)

B 29 B

B 01 F

Der vorliegende Recherchenbericht wurde für alle Patentansprüche erstellt

| Recherchenort | Abschlußdatum der Recherche | Prüfer |
|---|---|---|
| WIEN | 30-06-1983 | BAUMGARTNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82